# EUROPÄISCHE PATENTSCHRIFT

(11) **EP 3 978 442 B1**
(45) Veröffentlichungstag und Bekanntmachung des Hinweises auf die Patenterteilung: **15.11.2023**
(21) Anmeldenummer: 21198420.8
(22) Anmeldetag: 23.09.2021
(51) Int. Cl.: C01G 49/06, C02F 1/62, C22B 3/10, C22B 3/22, C22B 3/44

(54) **VERFAHREN ZUR HERSTELLUNG VON HOCHREINEM EISENOXID**
METHOD FOR THE PREPARATION OF HIGH PURITY IRON OXIDE
PROCÉDÉ DE PRODUCTION D'OXYDE DE FER À HAUT DEGRÉ DE PURETÉ

(30) Priorität: 30.09.2020 DE 102020212338
(43) Veröffentlichungstag der Anmeldung: 06.04.2022
(73) Patentinhaber: ThyssenKrupp Steel Europe AG, 47166 Duisburg (DE)
(72) Erfinder: Pappert, Dr. Eckhard, 44534 Lünen (DE); Tebeck, Andreas, 47509 Rheurdt (DE); Brüne, Björn, 59755 Arnsberg (DE); Bachmann, Uwe, 44287 Dortmund (DE)
(74) Vertreter: ThyssenKrupp Steel Europe AG

(56) Entgegenhaltungen:
- EP-A1- 0 813 500
- EP-B1- 0 813 500
- WO-A1-2020/107122
- KR-A- 20150 030 817
- US-A- 4 591 489
- US-A1- 2007 051 276

## Beschreibung

Die Erfindung betrifft ein Verfahren zur Herstellung von Eisen(III)-oxid aus einer salzsauren eisenchloridhaltigen Lösung umfassend oder bestehend aus den Schritten:
i) Reduzieren der Konzentration der freien Säure in der salzsauren eisenchloridhaltigen Lösung;
ii) Abscheiden von Schwermetallen durch elektrolytische Zementation;
iii) Ausfällen von Schwermetall-Komponenten und/oder gegebenenfalls Si-Komponenten;
iv) Ausfällen von verbleibenden Ni-Komponenten;
v) Abfiltrieren der Dispersion;
vi) thermische Zersetzung des Filtrats zu Eisen(III)-oxid und Chlorwasserstoff.

Eisen(III)-oxid, auch als Eisenoxidrot bezeichnet, entspricht der chemischen Zusammensetzung von Rost und wird vornehmlich als Pigment oder für Katalysatoren verwendet. Es ist für Rostschutzanstriche von Bedeutung aber auch als Lebensmittelfarbe zugelassen. Außerdem wird es auch als magnetisierbares Material eingesetzt.

Die Gewinnung von Eisen(III)-oxid mittels Pyrohydrolyse von FeCl2 ist beispielsweise aus der DE 10311549 A1 und aus der KR20150030817 bekannt. Ursprünglich diente die Pyrohydrolyse hauptsächlich zur Regeneration von HCl aus Beizlösungen (FeCl2). Später wurde es zu einem bedeutenden Verfahren zur Gewinnung von Oxidrohstoffen, besonders von Eisenoxiden weiterentwickelt. Es wurde versucht, möglichst reine Eisenoxide für die Ferritindustrie herzustellen. In der DE 10022867 A1 wird zur Reinigung einer mit Nickel- und Bleiionen belasteten Eisen(II)salzlösung eine überstöchiometrische Zugabe von Natriumsulfid oder Natriumhydrogensulfid im sauren Bereich beschrieben.

Aufgabe der vorliegenden Erfindung war es, ein Verfahren, insbesondere im industriellen Maßstab, zur Verfügung zu stellen, mit welchen Eisen(III)-oxide hoher Reinheit, mit möglichst wenig Verunreinigungen und insbesondere einem geringen Massenanteil an NiO hergestellt wird. Ziel ist es, reines Fe203 herzustellen, in einer Reinheit von mindestens 99,50 % Fe203 und einem maximalen Massenanteil an NiO (Nickeloxid) von 0,013% im Eisen(III)-oxid. Das Verfahren soll ferner eine Erhöhung der Alkali-Komponenten, insbesondere in der regenerierten Salzsäure, aber auch eine Verunreinigung des Fe203 damit vermeiden.

Insbesondere sollte Na20 und/oder K20 vermieden werden, bzw. soll das Fe203 Konzentrationen von weniger als 0,008 % Na20 und 0,001 % K20 aufweisen. Weitere Aufgabe war es einen apparativen bzw. Anlage-technischen Aufwand zu vermeiden und das neue Verfahren in vorhandenen Anlagen durchzuführen, unter Beibehaltung der Anlagenkonfiguration. In diesem Sinne sollte auch die Anzahl der Schritte möglichst effektiv sein. Außerdem sollen die Herstellkosten pro Tonne Eisen(III)oxid lediglich in geringem Maße erhöht werden.

Gelöst werden diese Aufgaben durch das in den Ansprüchen definierte Verfahren.

Ein Gegenstand der vorliegenden Erfindung ist mithin ein Verfahren zur Herstellung von Eisen(III)-oxid aus einer salzsauren eisenchloridhaltigen Lösung umfassend oder bestehend aus folgenden Schritten:
i) Reduzieren der Konzentration der freien Säure in der salzsauren eisenchloridhaltigen Lösung durch Zugabe eines Metalls und/oder einer Metallegierung und gegebenenfalls Einstellen des pH-Wertes;
ii) Abscheiden von Schwermetallen durch elektrolytische Zementation und gegebenenfalls Einstellen des pH-Wertes;
iii) Ausfällen von Schwermetall-Komponenten und/oder gegebenenfalls Si-Komponenten mittel mindestens eines Flockungsmittels und Einstellen des pH-Wertes;
iv) Zugabe von organischen und/oder anorganischen Verbindungen die funktionellen Gruppen enthaltend Schwefel aufweisen und Ausfällen von Ni-Komponenten;
v) Abfiltrieren der Dispersion;
vi) thermische Zersetzung des Filtrats enthaltend oder bestehend aus einer Eisenchloridlösung zu Eisen(III)-oxid und Chlorwasserstoff.

Im Sinne der vorliegenden Erfindung beschreibt der Begriff "Element-Komponente", wie zum Beispiel Eisen-, Nickel-, Alkalimetall-, Schwermetall-Komponenten einen Stoff der das jeweilige Element wie zum Beispiel Fe, Ni, Alkalimetall unabhängig von der Form, aufweist. Das jeweilige Element liegt dabei als Atom, Ion, oder kovalent gebunden in einer Verbindung bzw. einem Molekül vor, als Salz oder Oxid; Metalle können in ihrer metallischen Form vorliegen. Diese werden auch als metallische Komponente bezeichnet. Im Sinne der Erfindung beschreibt der Begriff "Schwermetall" ein Nicht-Eisen-Metall (NE-Metall) mit einer Dichte ≥ 5 g/cm³. Ein solches Schwermetall ist ausgewählt aus der Gruppe enthaltend oder bestehend aus Pb, Zn, Cr, Cd, Co, Cu, Mn, Mo, Ni, Nb, V, Sn, Bi und As; bevorzugt Ni, As, Cd, Pb, Cr, Cu und Sn, besonders bevorzugt Edelmetalle, Cu, Co, Zn, As, Pb und/oder Bi.

Der Begriff Alkalimetalle umfasst die Metalle der ersten Hauptgruppe des Periodensystems, bevorzugt betrifft die Erfindung die Alkalimetalle Na und K, sowie entsprechend des Begriffs Komponente wie oben definiert, auch Stoffe und Verbindungen enthaltend Na und/oder K in beliebiger Form.

Der Begriff der freien Säure beschreibt die zum Beizen noch zur Verfügung stehende Säure. In einer Alternative kann sie durch potentiometrische Titration mit einer NaOH-Lösung bis zum Erreichen eines pH-Wertes von 4,2 bestimmt werden. Die Gesamtsäure entspricht der Gesamtmenge aus freier Säure und der Menge an bereits umgesetzter Säure. Zur Gesamtsäurebestimmung wird mit NaOH bis zum Erreichen eines pH-Wertes von 8,6 titriert.

In einer Ausführung wird als salzsaure eisenchloridhaltige Lösung eine in der Stahlerzeugung und/oder - verarbeitung gebrauchte Beize eingesetzt. Diese stellen oft ein Entsorgungs- und Umweltproblem dar, weshalb eine Regeneration der Beize und Verwertung der Inhaltsstoffe und insbesondere eine Reduktion der Abfälle vorteilhaft ist. Somit betrifft die Erfindung auch ein Verfahren zur Aufbereitung von Eisen- und Schwermetall-Komponenten-haltigen Beizen wie sie insbesondere in der Stahlherstellung und/oder - verarbeitung anfallen. Es handelt sich dabei um Lösungen, die beispielsweise beim salzsauren Beizen von Stahl, insbesondere C-Stahl oder auch z.B. durch Auflösen von Schrott in Salzsäure erzeugt werden. Die Erfindung betrifft ferner auch die Verwendung des Verfahrens zur Aufbereitung von Eisen- und Schwermetall-Komponenten-haltigen Beizen.

Eine weitere Ausführung ist dadurch gekennzeichnet, dass in Schritt i) als Metall Eisen und/oder mindestens eine Eisen-haltige Legierung, bevorzugt Stahl, insbesondere Stahlschrott eingesetzt wird. Der Einsatz von Eisen und/oder mindestens einer Eisen-haltigen Legierung muss nicht ausschließlich erfolgen. Mithin werden in einer Alternative neben Eisen und/oder mindestens einer Eisen-haltigen Legierung weitere Metalle, die edler als Eisen sind, und/oder Legierungen enthaltend metallische Komponenten die edler als Eisen sind, eingesetzt.

In einer Ausführung wird in Schritt i) und/oder ii) ein pH-Wert von 1,5 bis 3,0 eingestellt. In einer Alternative wird der pH-Wert so eingestellt, dass er mindestens 1,5, bevorzugt mindestens 1,6, besonders bevorzugt mindestens 1,7, insbesondere mindestens 1,8 oder mindestens 1,9 und maximal 3,0, bevorzugt maximal 2,5, besonders bevorzugt maximal 2,25, insbesondere maximal 2,1 oder 2,0 beträgt. Bevorzugt erfolgt dies lediglich durch Zugabe eines Metalls und/oder einer Metallegierung.

Dieser pH-Wert ist vorteilhaft für die Zementation. Gleichzeitig wird in der Lösung befindliches 3-wertiges Eisen zur 2-wertigen Stufe reduziert. In einer Alternative erfolgt durch die Eisenzugabe die Zementation der in der elektrochemischen Spannungsreihe positiveren Elemente Kupfer, Arsen, Antimon und Wismut sowie Teilmengen an Blei.

In einer Ausführung wird in Schritt i) der Massenanteil an Eisen-Komponenten der salzsauren eisenchloridhaltigen Lösung erhöht, d.h., Eisen-Komponenten aus den hinzugefügten Metallen und/oder einer Metalllegierung gehen, insbesondere als Fe(II)-Ionen (Fe2+) in Lösung.

Eine weitere Ausführung ist dadurch gekennzeichnet, dass in Schritt ii) Schwermetalle ausgewählt aus der Gruppe enthaltend oder bestehend aus Pb, Zn, Cr, Cd, Co, Cu, Mn, Mo, Ni, Nb, V, Sn, Bi und As sowie Metalle edler als Eisen, bevorzugt Edelmetalle, Cu, Co, Zn, As, Pb und/oder Bi durch elektrolytische Zementation abgeschieden werden. Eine Variante der Schwermetallzementierung erfolgt nach bekannten Verfahren aus der hydrometallurgischen Reinigung, d.h., metallische Komponenten dienen als Spurenfänger für die entsprechenden Schwermetalle.

Die metallischen Komponenten werden in einer Ausführung durch die in Schritt i) zugegebenen Metalle und/oder Metallegierungen zur Verfügung gestellt, so dass in Schritt ii) die Schwermetalle daran abgeschieden werden. Es werden mithin vor der elektrolytischen Zementation in Schritt ii) außerhalb von Schritt i) keine weiteren Metalle zugegeben, an denen die Schwermetalle der salzsauren eisenchloridhaltigen Lösung abgeschieden werden. In einer Alternative werden in Schritt ii) die oben genannten Schwermetalle jedoch nicht vollständig entfernt, insbesondere Ni-Komponenten verbleiben in Lösung.

In einer Ausführung wird in Schritt iii) und/oder iv) ein pH-Wert von 2,5 bis 5,5 eingestellt. In einer Alternative wird der pH-Wert so eingestellt, dass er mindestens 2,5, bevorzugt mindestens 3,0, besonders bevorzugt mindestens 3,5, insbesondere mindestens 3,8 oder mindestens 3,9 und maximal 5,5, bevorzugt maximal 5,0, besonders bevorzugt maximal 4,5, insbesondere 4,2 oder 4,1 beträgt.

Eine Ausführung betrifft das Einstellen des oben beschrienen pH-Wertes in Schritt iii) und/oder iv) mit einer (NH4)OH-Lösung. Dadurch wird die Verwendung von Stoffen enthaltend Alkalimetall-Komponenten vermieden.

In einer Ausführung werden in Schritt iii) Schwermetall-Komponenten ausgewählt aus der Gruppe enthaltend oder bestehend aus Ni-, Cr-, Cu-, Ni-, Pb- und Zn-, sowie gegebenenfalls Si-Komponenten mittels Flockungsmittel ausgefällt. Flockungsmittel sind dem Fachmann bekannte Stoffe, die auf das Entfernen spezifischer Elemente abgestimmt sind. Es handelt sich um Hilfsmittel zur Flockung, um eine Fest-Flüssig-Trennung durchzuführen. Flockungshilfsmitteln sind organische, synthetische, hochmolekulare und wasserlösliche Polyelektrolyte auf der Basis von Polyacrylamid. Auch andere organische Polyelektrolyte synthetischen oder natürlichen Ursprungs werden verwendet. In einer Alternative sorgen die Flockungsmittel bei der Ausfällung für die Ausbildung besser filtrierbarer Aggregate und/oder Partikel. Je nach pH-Wert kann auch eine Hydroxidfällung stattfinden. Erfindungsgemäß erfolgt über die Flockungshilfsmittel kein Alkali-Eintrag, da die Mittel nicht in Lösung bleiben und mit abfiltriert werden. In einer Alternative werden in Schritt iii) die oben genannten Schwermetalle jedoch nicht vollständig entfernt, insbesondere Ni-Komponenten verbleiben in Lösung.

In Schritt iv) des erfindungsgemäßen Verfahrens werden die nach Schritt iii) noch in Lösung verbleibenden Ni-Komponenten mittels organischen und/oder anorganischen Verbindungen ausgefällt, die funktionelle Gruppen enthaltend Schwefel aufweisen. Bei den nach Schritt iii) noch in Lösung verbleibenden Ni-Komponenten handelte sich im Wesentlichen um Ni2+-lonen. "Im Wesentlichen" bedeutet in diesem Fall, dass die Ni2+-lonen in einem Massenanteil von mindestens 99,0 %, bevorzugt 99,5 %, besonders bevorzugt 99,9 %, insbesondere 99,99 % oder mehr in Bezug auf die gesamte Masse der Ni-Komponenten vorliegen. Bei den eingesetzten organischen und/oder anorganischen Verbindungen, die funktionelle Gruppen enthaltend Schwefel aufweisen, ist es wesentlich, dass das Schwefelatom mindestens ein freies Elektronenpaar besitzt, welches für eine Wechselwirkungen mit dem Nickel (metallisch oder als Ni2+-lonen) zur Verfügung gestellt werden kann, sodass hier eine chemische Bindung im weitesten Sinne (ionische Bindung, kovalente Bindung, koordinative Bindung oder schwache Bindung über elektrostatische Anziehung oder Van der Waals-Kräfte) ausgebildet wird. Bevorzugt werden anorganische und/oder organische Sulfide eingesetzt. In einer Alternative ist der Einsatz von Schwefelwasserstoff ausgeschlossen. Als organische Sulfide werden bevorzugt sogenannte Organosulfide eingesetzt. Unter Organosulfiden versteht man organische Verbindungen mit Schwefelatomen, die Metalle, insbesondere Nickel, im Abwasser bzw. wässrige Lösungen binden können. In der Literatur werden einige Organosulfide genannt, die in einer Alternative auch erfindungsgemäß als Fällungsmittel in Abwasserbehandlungsanlagen zum Einsatz kommen können (z. B. Mercaptobenzothiazol, Thioharnstoff, Dimethyldithiocarbamat, Diethyldithiocarbamat (DEDTC), Trimercaptotriazin (TMT) usw.).

Eine Ausführung betrifft dabei den Einsatz in Schritt iv) von organischen und/oder anorganischen Verbindungen mit funktionellen Gruppen enthaltend Schwefel und funktionellen Gruppen enthaltend Stickstoff.

In einer weiteren Ausführung werden dabei in Schritt iv) Alkalimetall-freie, bevorzugt Na-freie Verbindungen, bzw. Na-freie Verbindungen, bevorzugt Alkalimetall-freie eingesetzt. Dies bedeutet, dass die oben beschriebenen Verbindungen im wesentlichen Alkalimetall-frei, bevorzugt Na-frei, bzw. Na-freie Verbindungen, bevorzugt Alkalimetall-freie sind. In diesem Zusammenhang definiert der Begriff "im Wesentlichen Alkalimetall-frei, bevorzugt Na-frei" Verbindungen, in denen Alkalimetalle, bevorzugt Natrium lediglich als Verunreinigung vorkommt, d. h., Alkalimetalle, insbesondere Natrium wurden nicht absichtlich als Komponente der oben beschriebenen Verbindungen bei deren Herstellung hinzugefügt. Der erfindungsgemäße Sachverhalt bezogen auf Alkalimetalle ist in einer Alternative analog auch auf Erdalkalimetalle, insbesondere Calcium übertragbar. In einer weiteren Ausführung werden in Schritt iv) Verbindungen ausgewählt aus der Gruppe enthaltend oder bestehend aus (NH4)2S, (NH4)HS und modifiziertem, Alkalimetall-freie, bevorzugt Na-freie Organosulfid eingesetzt. In einer Alternative werden die bei der Kokerei anfallenden ammoniakalischen Sulfid-Lösungen direkt, oder gegebenenfalls nach Aufreinigung durch Ionenaustauscher als kosteneffizientes Fällungsmittel eingesetzt. In einer Alternative werden die organischen und/oder anorganischen Verbindungen, die funktionelle Gruppen enthaltend Schwefel aufweisen, aus einem Explosions-geschütztem Behälter, insbesondere im Fall von (NH4)2S und/oder (NH4)HS zugeführt. Dabei erfolgt die Zufuhr in einer Alternative mittels einer Pumpe, die genau definierte, mittels eines Mengenzählers bestimmte Mengen zuführt.

In einer Alternative handelt es sich bei den Organosulfiden um Moleküle mit einem polymeren Grundmolekül welches eine Vielzahl zusätzlicher, funktioneller Schwefel- und Stickstoffverbindungen bzw -gruppen aufweist. Für den erfindungsgemäßen Einsatz müssen Organsulfide die als Gegenkationen zu an ionischen Polymeren Alkalimetall-Ionen aufweisen, mittels Ammoniummodifizierten Kationenaustauscher modifiziert werden. Ammonium-modifizierte Kationenaustauscher bedeutet, dass diese im Gegensatz zu handelsüblichen Kationenaustauscher nicht H+, Na+ oder K+ - Ionen zur Verfügung stellen sondern NH4+-lonen. Damit sind auch Organosulfide, die in der Regel Natrium-Ionen beinhalten aber deutlich ungefährlicher im Handling in Bezug auf HSE-Anforderungen sind, für das erfindungsgemäße Verfahren nutzbar.

In einer weiteren Alternative wird das gesamte Verfahren ohne Zugabe von Alkalimetall-Komponenten durchgeführt.

Die in Schritt iv) eingesetzten Verbindungen werden in einem Massenanteil von mindestens 0,01 %, 0,02 %, 0,03 %, 0,04 %, 0,05 %, bevorzugt 0,06 %, 0,07 %, 0,08 %, 0,09 %, besonders bevorzugt 0,1 %, 0,2 %, 0,25 %, insbesondere 0,3 %, 0,4 % eingesetzt. In einer Alternative werden die Verbindungen in einem Massenanteil von maximal 10%, maximal bevorzugt 5%, insbesondere maximal 2 % für eine Fällung eingesetzt. Es wird bei diesen Konzentrationen eine Einwirkzeit von 60 bis 90 Minuten bevorzugt.

Der pH-Wert spielt eine Rolle bei der Vermeidung der Oxidation von Fe(II) zu Fe (III), welches als Fe(OH)3 ausfallen würde. Durch den eingestellten pH ist gewährleistet, dass die Eisen-Komponente im Wesentlichen als Fe(II) vorliegt und in Lösung bleibt und zur weiterer Verarbeitung und letztendlich Herstellung von Fe203 verwendet werden kann. Der Ausdruck "im Wesentlichen als Fe(II)" wird hier verwendet, um zu definieren das Fe(II) in einem Massenanteil von mindestens 50 %, 60 %, 70 %, bevorzugt mindestens 80 %, besonders bevorzugt mindestens 90 %, insbesondere mindestens 95 % oder mehr in Bezug auf die Masse der gesamten Eisen-Komponenten vorliegt. In diesem Sinne wird in einer Alternative des erfindungsgemäßen Verfahrens die Zugabe von Oxidationsmittel vermieden.

In dem weiteren Schritt v) wird die Dispersion nach Schritt iv) gefiltert mit den üblichen, dem Fachmann bekannten Mitteln, bevorzugt in einer Filterpresse. Das erhaltene Filtrat besteht im Wesentlichen aus einer FeCl2-Lösung. Hierbei bedeutet im Wesentlichen, dass Verunreinigungen in einer Konzentration vorliegen, die kleiner als 1,0% bevorzugt 0,75%, besonders bevorzugt 0,6%, 0.55% ist.

Zur Herstellung des Eisen(III)oxids wird das oben beschriebene Filtrat einer Pyrolyse unterworfen, in einer Ausführung wird diese in einem Sprühröster oder in einem Wirbelschichtröster, auch Fließbettverfahren genannt, durchgeführt. Bei dem Sprühröstverfahren wird Filtrat enthaltend oder bestehend aus mit dem Eisen(II)chlorid in einen leeren Reaktor, der durch Brenner direkt beheizt ist, eingesprüht, wobei sich ein feines, staubförmiges Eisenoxid bildet. Bei dem Fließbettverfahren wird die Lösung in einen Fließbettreaktor eingedüst, der ein Bett aus kugelförmigen Eisenoxidpartikeln enthält, die durch die Brennergase und die Fluidisierungsluft in Schwebe gehalten werden, wobei sich ein grobkörniges Eisenoxid bildet. Bevorzugt wird Bindung erfindungsgemäß ein Sprühröster verwendet. Dabei wird das Filtrat in einem Sprührostofen bei mindestens 500 °C, bevorzugt mindestens 550 °C, mindestens 600 °C, besonders bevorzugt mindestens 620 °C und bei maximal 800 °C, bevorzugt maximal 780 °C, besonders bevorzugt maximal 750 °C, 7 maximal 00 °C, insbesondere maximal 680 °C thermisch zersetzt.

Dabei wird in einer Ausführung ein im Wesentlichen Ni-Komponenten-freies Eisen(III)oxid hergestellt. In diesem Zusammenhang bedeutet der Begriff "ein im Wesentlichen Ni-Komponenten-freies Eisen(III)oxid", dass der Massenanteil an Ni-Komponenten, insbesondere NiO, maximal 0,05 %, 0,025 %, 0,2 %, bevorzugt 0,015 %, 0,0125 %, 0,01 %, besonders bevorzugt 0,009 %, 0,008 %, 0,007 %, 0,006 %, 0,005 %, 0,004 %, 0,003 %, 0,002 %, 0,001 %, insbesondere 0,0008 %, 0,0007 %, 0,0006 %, 0,0005 %, 0,0004 %, 0,0003 %, 0,0002 %, oder 0,0001 % im Eisen(III)oxid beträgt. In einer Alternative kann der Massenateil der Ni-Komponenten im Filtrat bestimmt werden und auf das Produkt, also Fe203 bezogen werden.

In einer weiteren Ausführung wird ein high-purity Fe2O3 hergestellt, in einer Reinheit von mindestens 99,50 %, bevorzugt 99,6%, 99,7% insbesondere 99,8% oder mehr Fe203 und einem maximalen Massenanteil an NiO (Nickeloxid) von 0,05% im Eisen(III)-oxid, der Rest sind unvermeidbare Verunreinigungen.

In einer Ausführung des erfindungsgemäßen Verfahrens können neben Eisen(III)oxid auch noch weitere Eisenoxide hergestellt werden. Ferner kann bei der thermischen Zersetzung des Filtrats in Schritt vi) auch Wasserdampf entstehen.

In einer weiteren Ausführung wird in einem zusätzlichen Schritt vii) der aus der Pyrolyse entstandene Chlorwasserstoff in Wasser eingeleitet und gelöst. Dadurch wird Salzsäure, regenerierte Salzsäure gebildet, die erneut als Beize einsetzbar ist. Diese regenerierte Salzsäure ist ebenfalls Alkali-Komponenten frei, in dem oben beschriebenen Sinn. Insbesondere zeigt der absolute Gehalt an Alkalimetall-Komponenten der regenerierten Salzsäure keine Erhöhung gegenüber jenem der gebrauchten Beize die als Ausgangsstoff in dem erfindungsgemäßen Verfahren eingesetzt wird.

Gegenstand der vorliegenden Erfindung ist mithin auch ein Verfahren zur Regeneration von Salzsäure mittels der oben beschriebenen Schritte zur Herstellung von Eisen(III)oxid, wobei der absolute Gehalt an Alkalimetall-Komponenten der regenerierten Salzsäure keine Erhöhung gegenüber jenem der gebrauchten Beize aufweist, die als Ausgangsstoff in dem erfindungsgemäßen Verfahren eingesetzt wird.

Die Bestimmung der Konzentration erfolgt mit dem Fachmann bekannten chemischen Analysemethoden, insbesondere mittels ICP-OES (Optischer Emissions-Spektrometer mit induktiv gekoppeltem Plasma, Gerät Arcos von Firma Spectro).

Im Sinne der Erfindung können auch Kombinationen der oben beschriebenen Ausführungen und Alternativen eingesetzt werden.

### Beispiele:

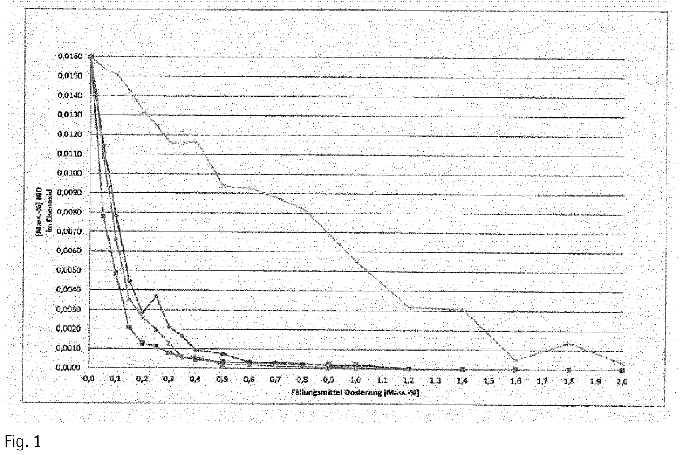

In einem Fällungsversuch wurden verschiedene Na-freie anorganische und organische Sulfide getestet. Es wurden jeweils wässrige Lösungen der Sulfide verwendet und diese in dem in Fig. 1 angegebenen Massenanteil zudosiert. Eingesetzt wurde eine Lösung HydroMet (dabei handelt es sich um Produkt HydroMet Alpha^{®}-SL der Firma Färber und Schmid AG, Dietikon, Schweiz; wobei das Ammonium-modifizierte Eluats eines käuflich erworbenen Produkts in dem in Fig. 1 angegebenen Massenaneil eingesetzt wurde), eine 40-prozentige Ammoniumshydrogensulfid-Lösung (Dreiecke), eine 20-prozentige Ammoniumsulfid-Lösung (Kreise) und eine 40-prozentige Ammoniumsulfid-Lösung (Quadrate). Die Einwirkzeit war 90 Minuten.

Die Ergebnisse gemäß Fig. 1 belegen eindeutig den Effekt der in Schritt iv) Zuge begebenen organischen und/oder anorganischen Verbindungen die funktionelle Gruppe enthaltend Schwefel aufweisen. Der Massenanteil an NiO im Eisen(III)oxid kann auf weniger als 0,0005 % gesenkt werden.

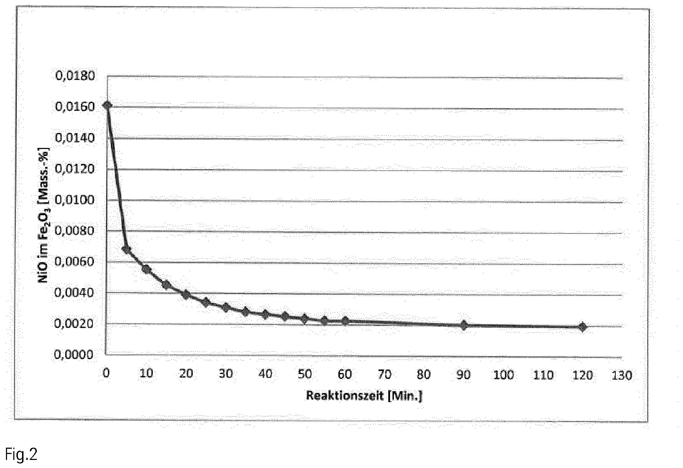

In einem zweiten Fällungsversuch wurde die Reaktionskinetik untersucht. Dazu wurden 7 I einer 20-prozentigen Ammonium Sulfide Lösung pro Kubikmeter Beize in einen 100 m³ umfassenden Reaktionsbehälter zugegeben. In dem Behälter befand sich eine Dispersion gemäß Schritt iii). In regelmäßigen Zeitabständen wurde der Massenanteil an Ni bestimmt. Die Ergebnisse sind in Fig. 2 zusammengefasst. Die Ergebnisse zeigen, dass die Fällung schon nach 90 Minuten vollständig abgeschlossen ist.

## Patentansprüche

1. Verfahren zur Herstellung von Eisen(III)oxid aus einer salzsauren eisenchloridhaltigen Lösung umfassend oder bestehend aus folgenden Schritten:
i) Reduzieren der Konzentration der freien Säure in der salzsauren eisenchloridhaltigen Lösung durch Zugabe eines Metalls und/oder einer Metalllegierung und gegebenenfalls Einstellen des pH-Wertes;
ii) Abscheiden von Schwermetallen durch elektrolytische Zementation; gegebenenfalls Einstellen des pH-Wertes;
iii) Ausfällen von Schwermetall-Komponenten und/oder gegebenenfalls Si-Komponenten mittel mindestens eines Flockungsmittels und gegebenenfalls Einstellen des pH-Wertes;
iv) Zugabe von organischen und/oder anorganischen Verbindungen die funktionellen Gruppen enthaltend Schwefel aufweisen und Ausfällen von Ni-Komponenten;
v) Abfiltrieren der Dispersion;
vi) thermische Zersetzung des Filtrats enthaltend oder bestehend aus einer Eisenchloridlösung zu Eisenoxid und Chlorwasserstoff.

2. Verfahren nach Anspruch 1, **dadurch gekennzeichnet, dass** die salzsaure eisenchloridhaltige Lösung eine in der Stahlerzeugung und/oder - verarbeitung gebrauchte Beize ist.

3. Verfahren nach einem der vorangehenden Ansprüche, **dadurch gekennzeichnet, dass** in Schritt i) als Metall Eisen und/oder mindestens eine Eisen-haltige Legierung, bevorzugt Stahl, insbesondere Stahlschrott eingesetzt wird.

4. Verfahren nach einem der vorangehenden Ansprüche, **dadurch gekennzeichnet, dass** in Schritt i) und/oder ii) ein pH-Wert von 1,5 bis 3,0 und in Schritt iii) und/oder iv) ein pH-Wert von 2,5 bis 5,5 eingestellt wird.

5. Verfahren nach Anspruch 4, **dadurch gekennzeichnet, dass** der pH-Wert in Schritt iii) und/oder iv) mit einer (NH4)OH-Lösung eingestellt wird.

6. Verfahren nach einem der vorangehenden Ansprüche, **dadurch gekennzeichnet, dass** in Schritt i) der Massenanteil an Eisen-Komponenten der salzsauren eisenchloridhaltigen Lösung erhöht wird.

7. Verfahren nach einem der vorangehenden Ansprüche, **dadurch gekennzeichnet, dass** in Schritt ii) Schwermetalle ausgewählt aus der Gruppe enthaltend oder bestehend aus Pb, Zn, Cr, Cd, Co, Cu, Mn, Mo, Ni, Nb, V, Sn, Bi und As sowie Metalle edler als Eisen durch elektrolytische Zementation abgeschieden werden.

8. Verfahren nach einem der vorangehenden Ansprüche, **dadurch gekennzeichnet, dass** in Schritt ii) die Schwermetalle an metallischen Komponenten des in Schritt i) zugegebenen Metalls und/oder Metalllegierung abgeschieden werden.

9. Verfahren nach einem der vorangehenden Ansprüche, **dadurch gekennzeichnet, dass** in Schritt iii) Schwermetall-Komponenten ausgewählt aus der Gruppe enthaltend oder bestehend aus Ni-, Cr-, Cu-, Ni-, Pb- und Zn-, sowie gegebenenfalls Si-Komponenten mittels Flockungsmittel ausgefällt werden.

10. Verfahren nach einem der vorangehenden Ansprüche, **dadurch gekennzeichnet, dass** in Schritt iv) organische und/oder anorganische Verbindungen mit funktionellen Gruppen enthaltend Schwefel und funktionellen Gruppen enthaltend Stickstoff eingesetzt werden.

11. Verfahren nach einem der vorangehenden Ansprüche, **dadurch gekennzeichnet, dass** in Schritt iv) Alkalimetall-freie, bevorzugt Na-freie Verbindungen eingesetzt werden.

12. Verfahren nach einem der vorangehenden Ansprüche, **dadurch gekennzeichnet, dass** in Schritt iv) Verbindungen ausgewählt aus der Gruppe enthaltend oder bestehend aus (NH4)2S, (NH4)HS und modifiziertem, Alkalimetall-freie, bevorzugt Na-freie Organosulfide eingesetzt werden.

13. Verfahren nach einem der vorangehenden Ansprüche, **dadurch gekennzeichnet, dass** in Schritt vi) die Eisenchloridlösung einer Pyrohydrolyse, in einem Sprühröster oder in einem Wirbelschichtröster unterworfen wird.

14. Verfahren nach einem der vorangehenden Ansprüche, **dadurch gekennzeichnet, dass** ein im Wesentlichen Ni-Komponenten freies Eisenoxid hergestellt wird.

15. Verfahren nach einem der vorangehenden Ansprüche, **dadurch gekennzeichnet, dass** in einem Schritt vii) das Chlorwasserstoff in Wasser eingeleitet und gelöst wird.

## Claims

1. Process for producing iron(III) oxide from a hydrochloric acid-acidified, iron chloride-containing solution comprising or consisting of the following steps:
i) reducing the concentration of the free acid in the hydrochloric acid-acidified, iron chloride-containing solution by addition of a metal and/or a metal alloy and optionally adjusting the pH;
ii) depositing heavy metals by electrolytic cementation; optionally adjusting the pH;
iii) precipitating heavy metal components and/or optionally Si components using at least one flocculant and optionally adjusting the pH;
iv) adding organic and/or inorganic compounds comprising functional groups containing sulfur and precipitating Ni components;
v) filtratively removing the dispersion;
vi) thermally decomposing the filtrate containing or consisting of an iron chloride solution to afford iron oxide and hydrogen chloride.

2. Process according to Claim 1, **characterized in that** the hydrochloric acid-acidified, iron chloride-containing solution is a pickling solution used in steel production and/or processing.

3. Process according to either of the preceding claims, **characterized in that** in step i) the metal employed is iron and/or at least one iron-containing alloy, preferably steel, in particular scrap steel.

4. Process according to any of the preceding claims, **characterized in that** in step i) and/or ii) pH is adjusted to 1.5 to 3.0 and in step iii) and/or iv) pH is adjusted to 2.5 to 5.5.

5. Process according to Claim 4, **characterized in that** in step iii) and/or iv) the pH is adjusted with an (NH4)OH solution.

6. Process according to any of the preceding claims, **characterized in that** in step i) the mass fraction of iron components in the hydrochloric acid-acidified, iron chloride-containing solution is increased.

7. Process according to any of the preceding claims, **characterized in that** in step ii) heavy metals selected from the group containing or consisting of Pb, Zn, Cr, Cd, Co, Cu, Mn, Mo, Ni, Nb, V, Sn, Bi and As and metals nobler than iron are deposited by electrolytic cementation.

8. Process according to any of the preceding claims, **characterized in that** in step ii) the heavy metals are deposited on metallic components of the metal and/or metal alloy added in step i).

9. Process according to any of the preceding claims, **characterized in that** in step iii) heavy metal components selected from the group containing or consisting of Ni, Cr, Cu, Ni, Pb and Zn and optionally Si components are precipitated using flocculant.

10. Process according to any of the preceding claims, **characterized in that** in step iv) organic and/or inorganic compounds having functional groups containing sulfur and functional groups containing nitrogen are employed.

11. Process according to any of the preceding claims, **characterized in that** in step iv) alkali metal-free, preferably Na-free, compounds are employed.

12. Process according to any of the preceding claims, **characterized in that** in step iv) compounds selected from the group containing or consisting of (NH4)2S, (NH4)HS and modified, alkali metal-free, preferably Na-free, organosulfides are employed.

13. Process according to any of the preceding claims, **characterized in that** in step vi) the iron chloride solution is subjected to a pyrohydrolysis, in a spray roaster or in a fluidized bed roaster.

14. Process according to any of the preceding claims, **characterized in that** an iron oxide substantially free from Ni components is produced.

15. Process according to any of the preceding claims, **characterized in that** in a step vii) the hydrogen chloride is introduced into water and dissolved.

## Revendications

1. Procédé pour la préparation d'oxyde de fer (III) à partir d'une solution acide chlorhydrique contenant du chlorure de fer, comprenant ou constitué par les étapes suivantes :
i) réduction de la concentration en acide libre dans la solution acide chlorhydrique contenant du chlorure de fer par ajout d'un métal et/ou d'un alliage de métal et le cas échéant réglage du pH ;
ii) séparation de métaux lourds par cémentation électrolytique ; le cas échéant réglage du pH ;
iii) précipitation de composants de métaux lourds et/ou le cas échéant de composants de Si au moyen d'au moins un floculant et le cas échéant réglage du pH ;
iv) ajout de composés organiques et/ou inorganiques qui présentent des groupes fonctionnels contenant du soufre et séparation par précipitation de composants de Ni ;
v) séparation par filtration de la dispersion ;
vi) décomposition thermique du filtrat contenant ou constitué par une solution de chlorure de fer en oxyde de fer et en chlorure d'hydrogène.

2. Procédé selon la revendication 1, **caractérisé en ce que** la solution acide chlorhydrique contenant du chlorure de fer est un décapant utilisé dans la production et/ou le traitement de l'acier.

3. Procédé selon l'une quelconque des revendications précédentes, **caractérisé en ce que**, dans l'étape i), on utilise comme métal du fer et/ou au moins un alliage contenant du fer, de préférence de l'acier, en particulier de la ferraille d'acier.

4. Procédé selon l'une quelconque des revendications précédentes, **caractérisé en ce que**, dans l'étape i) et/ou ii), on règle un pH de 1,5 à 3,0 et, dans l'étape iii) et/ou iv), on règle un pH de 2,5 à 5,5.

5. Procédé selon la revendication 4, **caractérisé en ce que** le pH dans l'étape iii) et/ou iv) est réglé à l'aide d'une solution de (NH₄)OH.

6. Procédé selon l'une quelconque des revendications précédentes, **caractérisé en ce que**, dans l'étape i), la proportion massique de composants de fer de la solution acide chlorhydrique contenant du chlorure de fer est augmentée.

7. Procédé selon l'une quelconque des revendications précédentes, **caractérisé en ce que**, dans l'étape ii), on sépare, par cémentation électrolytique, des métaux lourds choisis dans le groupe contenant ou constitué par Pb, Zn, Cr, Cd, Co, Cu, Mn, Mo, Ni, Nb, V, Sn, Bi et As ainsi que des métaux plus nobles que le fer.

8. Procédé selon l'une quelconque des revendications précédentes, **caractérisé en ce que**, dans l'étape ii), les métaux lourds sont séparés sur les composants métalliques du métal et/ou de l'alliage métallique ajouté dans l'étape i).

9. Procédé selon l'une quelconque des revendications précédentes, **caractérisé en ce que**, dans l'étape iii), les composants de métal lourd choisis dans le groupe contenant ou constitué par des composants de Ni, Cr, Cu, Ni, Pb et Zn ainsi que le cas échéant des composants de Si sont séparés par précipitation au moyen d'un floculant.

10. Procédé selon l'une quelconque des revendications précédentes, **caractérisé en ce que**, dans l'étape iv), des composés organiques et/ou inorganiques présentant des groupes fonctionnels contenant du soufre et des groupes fonctionnels contenant de l'azote sont utilisés.

11. Procédé selon l'une quelconque des revendications précédentes, **caractérisé en ce que**, dans l'étape iv), des composés exempts de métal alcalin, de préférence exempts de Na, sont utilisés.

12. Procédé selon l'une quelconque des revendications précédentes, **caractérisé en ce que**, dans l'étape iv), des composés choisis dans le groupe contenant ou constitué par (NH₄)₂S, (NH₄)HS et des organosulfures modifiés, exempts de métal alcalin, de préférence exempts de Na, sont utilisés.

13. Procédé selon l'une quelconque des revendications précédentes, **caractérisé en ce que**, dans l'étape vi), la solution de chlorure de fer est soumise à une pyrohydrolyse, dans un dispositif de grillage par pulvérisation ou dans un dispositif de grillage à couche tourbillonnante.

14. Procédé selon l'une quelconque des revendications précédentes, **caractérisé en ce qu'**un oxyde de fer sensiblement exempt de composants de Ni est préparé.

15. Procédé selon l'une quelconque des revendications précédentes, **caractérisé en ce que**, dans une étape vii), le chlorure d'hydrogène est introduit dans de l'eau et dissous.
